# EUROPÄISCHE PATENTANMELDUNG

(11) **EP 0 855 428 A1**
(43) Veröffentlichungstag der Anmeldung: **29.07.1998**
(21) Anmeldenummer: 98101211.5
(22) Anmeldetag: 23.01.1998
(51) Int. Cl.: C08L 71/00, C08G 65/40

(54) **Thermoplastische Formmassen mit reduzierter Wasseraufnahme**

(30) Priorität: 24.01.1997 DE 19702588
(71) Anmelder: BASF AKTIENGESELLSCHAFT, 67056 Ludwigshafen (DE)
(72) Erfinder: Weber, Martin, 67487 Maikammer (DE); Elbl-Weiser, Karin, 69198 Schriesheim (DE)
(74) Vertreter: Kinzebach, Werner, Dr.

(57) **Zusammenfassung**

Die Erfindung betrifft thermoplastische Formmassen, enthaltend
A) wenigstens einen Polyarylenether,
B) wenigstens einen funktionalisierten Polyolefinkautschuk und
C) wenigstens einen modifizierten, Carboxylgruppen-haltigen Polyarylenether mit wiederkehrenden Strukturelementen der Formeln I und II 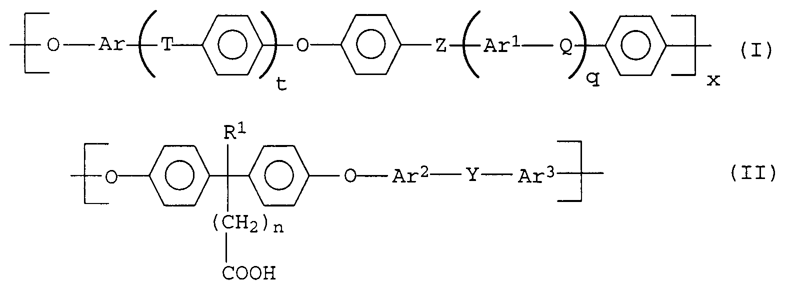 umfaßt,
   worin
   x für 0,5 oder 1 steht,
   t und q unabhängig voneinander für 0, 1, 2 oder 3 stehen,
   n für eine ganze Zahl von 0 bis 6 steht,
   Q, T, Y und Z unabhängig voneinander jeweils eine chemische Bindung oder eine Gruppe, ausgewählt unter -O-, -S-, -SO₂-, S=O, C=O, -N=N-, -R^{a}C=CR^{b}- und -CR^{c}R^{d}-, bedeuten, wobei
      R^{a}, R^{b}, R^{c} und R^{d} verschiedene Bedeutungen besitzen, mit der Maßgabe, daß mindestens eine der Gruppen T, Q und Z für -SO₂- oder C=O steht und, wenn t und q für 0 stehen, Z für -SO₂- oder C=O steht,
   Ar, Ar¹, Ar² und Ar³ unabhängig voneinander für C₆-C₁₈-Arylengruppen stehen, wobei diese gegebenenfalls mit C₁-C₁₂-Alkyl-, C₆-C₁₈-Aryl-, C₁-C₁₂-Alkoxygruppen oder Halogenatomen substituiert sind,
   R¹ für H, C₁-C₆-Alkyl, oder -(CH₂)ₙ-COOH steht; und
      wobei das molare Verhältnis von Einheiten der Formel I zu Einheiten der Formel II im Bereich von 0,05:99,95 bis 99,95:0,05 liegt,
   deren Verwendung zur Herstellung von Fasern, Filmen und Formkörpern, sowie die daraus hergestellten Gegenstände.

## Beschreibung

Die vorliegende Erfindung betrifft hochtemperaturbeständige thermoplastische Formmassen auf Basis von Polyarylenethern und funktionalisierten Polyolefinkautschuken, deren Verwendung zur Herstellung von Fasern, Filmen und Formkörpern, sowie die unter Verwendung der Formmassen hergestellten Gegenstände.

Polyarylenether sind hochtemperaturbeständige Werkstoffe, die sich insbesondere durch gute thermische Beständigkeit, gute mechanische Eigenschaften und gute Dimensionstabilität auszeichnen. Für viele Anwendungen ist jedoch die Feuchtigkeitsaufnahme der Polyarylenether ungünstig, weiterhin wird der Anwendungsbereich der Polyarylenether auch durch die geringe Chemikalienbeständigkeit begrenzt.

Weiterhin sind dem Fachmann Elends aus Polyarylenethern und Polyolefinen bekannt. So beschreibt beispielsweise die EP 0 451 803 elektrisch leitende Mischungen aus Polyphenylensulfid, Polyarylensulfon und Polyolefinen mit Glycidylgruppen. Diese Blends zeichnen sich zwar durch eine verbesserte Abriebsfestigkeit aus; gleichzeitig stellt jedoch deren mangelnde Zähigkeit aufgrund der Unverträglichkeit der Komponenten einen schwerwiegenden Nachteil dar.

Aufgabe der vorliegenden Erfindung war daher, thermoplastische Formmassen auf Basis von Polyarylenethern mit reduzierter Feuchtigkeitsaufnahme und verbesserter Chemikalienbeständigkeit zur Verfügung zu stellen, die sich außerdem durch gute mechanische Eigenschaften, wie Kerbschlagzähigkeit und hohe Duktilität, auszeichnen.

Überraschenderweise wurde nun gefunden, daß die Aufgabe gelöst wird durch Bereitstellung von thermoplastischen Formmassen, die als wesentliche Komponenten neben Polyarylenether funktionalisierten Kautschuk und einen Carboxylgruppen-modifizierten Polyarylether enthalten. Durch diese Maßnahme ergibt sich überraschenderweise eine signifikante Zähigkeitssteigerung bei gleichzeitiger Erhöhung der Chemikalienresistenz.

Gegenstand der vorliegenden Erfindung sind somit thermoplastische Formmassen, enthaltend
A) wenigstens einen Polyarylenether,
B) wenigstens einen funktionalisierten Polyolefinkautschuk und
C) wenigstens einen modifizierten, Carboxylgruppen-haltigen Polyarylenether mit wiederkehrenden Strukturelementen der Formeln I und II 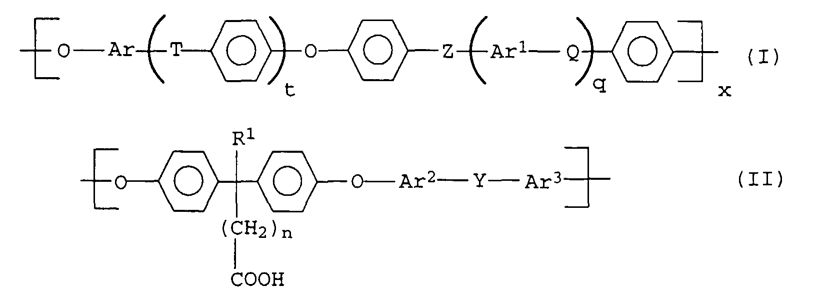 umfaßt,
   worin
   x für 0,5 oder 1 steht,
   t und q unabhängig voneinander für 0, 1, 2 oder 3 stehen,
   n für eine ganze Zahl von 0 bis 6 steht,
   Q, T, Y und Z unabhängig voneinander jeweils eine chemische Bindung oder eine Gruppe, ausgewählt unter -O-, -S-, -SO₂-, S=O, C=O, -N=N-, -R^{a}C=CR^{b}- und -CR^{c}R^{d}-, bedeuten, wobei
      R^{a} und R^{b} unabhängig voneinander jeweils für ein Wasserstoffatom oder eine C₁-C₁₂-Alkylgruppe stehen und
      R^{c} und R^{d} unabhängig voneinander jeweils für ein Wasserstoffatom oder eine C₁-C₁₂-Alkyl-, C₁-C₁₂-Alkoxy- oder C₆-C₁₈-Arylgruppe stehen, wobei R^{c} und R^{d} gegebenenfalls unabhängig voneinander mit Fluor- und/oder Chloratomen substituiert sind oder gegebenenfalls zusammen mit dem C-Atom an das sie gebunden sind, eine C₃-C₁₂-Cycloalkylgruppe bilden, die gegebenenfalls mit einer oder mehreren C₁-C₆-Alkylgruppen substituiert ist,
         mit der Maßgabe, daß mindestens eine der Gruppen T, Q und Z für -SO₂- oder C=O steht und, wenn t und q für 0 stehen, Z für -SO₂- oder C=O steht,
   Ar, Ar¹, Ar² und Ar³ unabhängig voneinander für C₆-C₁₈-Arylengruppen stehen, wobei diese gegebenenfalls mit C₁-C₁₂-Alkyl-, C₆-C₁₈-Aryl-, C₁-C₁₂-Alkoxygruppen oder Halogenatomen substituiert sind,
   R¹ für H, C₁-C₆-Alkyl, oder -(CH₂)ₙ-COOH steht; und
      wobei das molare Verhältnis von Einheiten der Formel I zu Einheiten der Formel II im Bereich von 0,05:99,95 bis 99,95:0,05 liegt.

Erfindungsgemäß bevorzugt sind solche modifizierten Polyarylenether (Komponente C), die einen Anteil freie Säuregruppen enthaltende Einheiten der Formel II von etwa 0,05 bis etwa 25 Mol-%, bestimmt durch ¹H-NMR, aufweisen.

Weiterhin bevorzugt sind modifizierte Polyarylenether (Komponente C), welche Strukturelemente der Formel II umfassen, worin Ar² und Ar³ jeweils für 1,4-Phenylen, Y für SO₂, R¹ für C₁-C₆-Alkyl und n für eine ganze Zahl von 1 bis 6 steht.

Die erfindungsgemäß bevorzugten nicht-modifizierten Polyarylenether (Komponente A) sind aus wiederkehrenden Strukturelementen der Formel I aufgebaut, wobei Ar, Ar¹, T, Q, Z, t und q die oben angegebenen Bedeutungen besitzen.

Erfindungsgemäß bevorzugte funktionalisierte Polyolefinkautschuke (Komponente B) weisen Glycidylgruppen auf.

Gemäß einer bevorzugten Ausführungsform werden thermoplastische Formmassen bereitgestellt, die, bezogen auf das Gesamtgewicht der Formmasse,
A) etwa 5 bis etwa 98 Gew.-% wenigstens eines Polyarylenethers,
B) etwa 1 bis etwa 50 Gew.-% wenigstens eines funktionalisierten Polyolefinkautschuks,
C) etwa 1 bis etwa 50 Gew.-% wenigstens eines Polyarylenethers mit Carboxylgruppen,
D) 0 bis etwa 60 Gew.-% wenigstens eines faser- oder teilchenförmigen Füll- oder Verstärkungsstoffs und
E) 0 bis etwa 30 Gew.-% wenigstens eines weiteren üblichen Zusatzstoffs
umfassen.

Erfindungsgemäß verwendbare Alkylreste umfassen geradkettige oder verzweigte, gesättigte Kohlenstoffketten mit bis zu 12 Kohlenstoffatomen. Beispielsweise können folgende Reste genannt werden: C₁-C₆-Alkylreste, wie Methyl, Ethyl, n-Propyl, i-Propyl, n-Butyl, sec.-Butyl, 2- oder 3-Methyl-pentyl; und längerkettige Reste, wie unverzweigtes Heptyl, Octyl, Nonyl, Decyl, Undecyl, Lauryl und die ein- oder mehrfach verzweigten Analoga davon.

Der Alkylteil von erfindungsgemäß brauchbaren Alkoxygruppen ist wie oben angegeben definiert.

Erfindungsgemäß verwendbare Cycloalkylreste umfassen insbesondere C₃-C₁₂-Cycloalkylreste, wie z.B. Cyclopropyl, Cyclobutyl, Cyclopentyl, Cyclohexyl, Cycloheptyl, Cyclooctyl, Cyclopropylmethyl, Cyclopropylethyl, Cyclopropylpropyl, Cyclobutylmethyl, Cyclobutylethyl, Cyclopentylethyl, -propyl, -butyl, -pentyl, -hexyl, Cyclohexylmethyl, -dimethyl, -trimethyl und dergleichen.

Beispiele für erfindungsgemäß brauchbare C₆-C₁₈-Arylengruppen sind Phenylengruppen, wie 1,2-, 1,3- und 1,4-Phenylen, Naphthylengruppen, wie z.B. 1,6-, 1,7-, 2,6- und 2,7-Naphthylen, sowie die von Anthracen, Phenanthren und Naphthacen abgeleiteten Brückengruppen.

Die erfindungsgemäßen Formmassen enthalten den oder die nicht-modifizierten Polyarylenether (Komponente A) in einem Anteil von etwa 5 bis 98, vorzugsweise etwa 20 bis 96 Gew.-%.

Erfindungsgemäß brauchbare Polyarylenether (Komponente A) sind aufgebaut aus wiederkehrenden Einheiten der Formel I 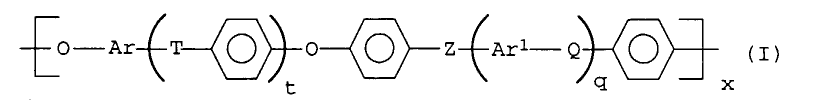 worin Ar, Ar¹, T, Z, Q, t, x und q die oben angegebenen Bedeutungen besitzen. Es können auch verschiedene Einheiten der Formel I statistisch oder in Blöcken verteilt im Polyarylenether vorliegen.

Die Herstellung erfindungsgemäß brauchbarer Polyarylenether A kann beispielsweise in Anlehnung an GB 1 152 035 und US 4,870,153 erfolgen, worauf hiermit ausdrücklich Bezug genommen wird. Geeignete Verfahrensbedingungen zur Synthese von Polyarylenethern sind beispielsweise in EP-A- 0 113 112 und EP-A- 0 135 130 beschrieben. Besonders geeignet ist die Umsetzung der Monomeren in aprotischen polaren Lösungsmitteln in Gegenwart von wasserfreiem Alkalicarbonat. Eine besonders bevorzugte Kombination ist N-Methylpyrrolidon als Lösungsmittel und Kaliumcarbonat als Katalysator. Die Umsetzung in der Schmelze ist ebenfalls bevorzugt. Die darin beschriebene Einführung von terminalen Anhydridgruppen ist für die vorliegende Erfindung jedoch nicht zwingend erforderlich. Beispiele für geeignete Polyarylenether A sind solche, mit mindestens einer der folgenden wiederkehrenden Struktureinheiten I₁ bis I₂₉:

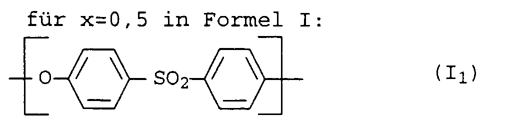

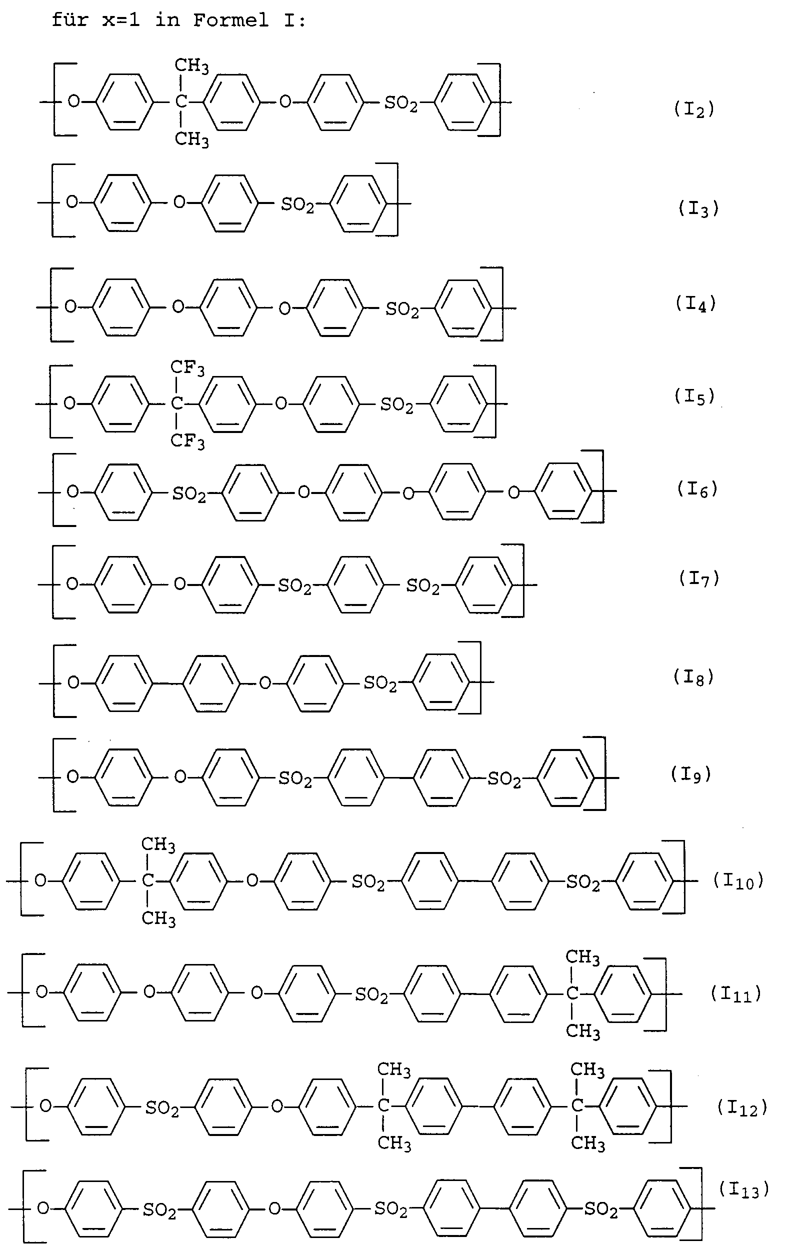

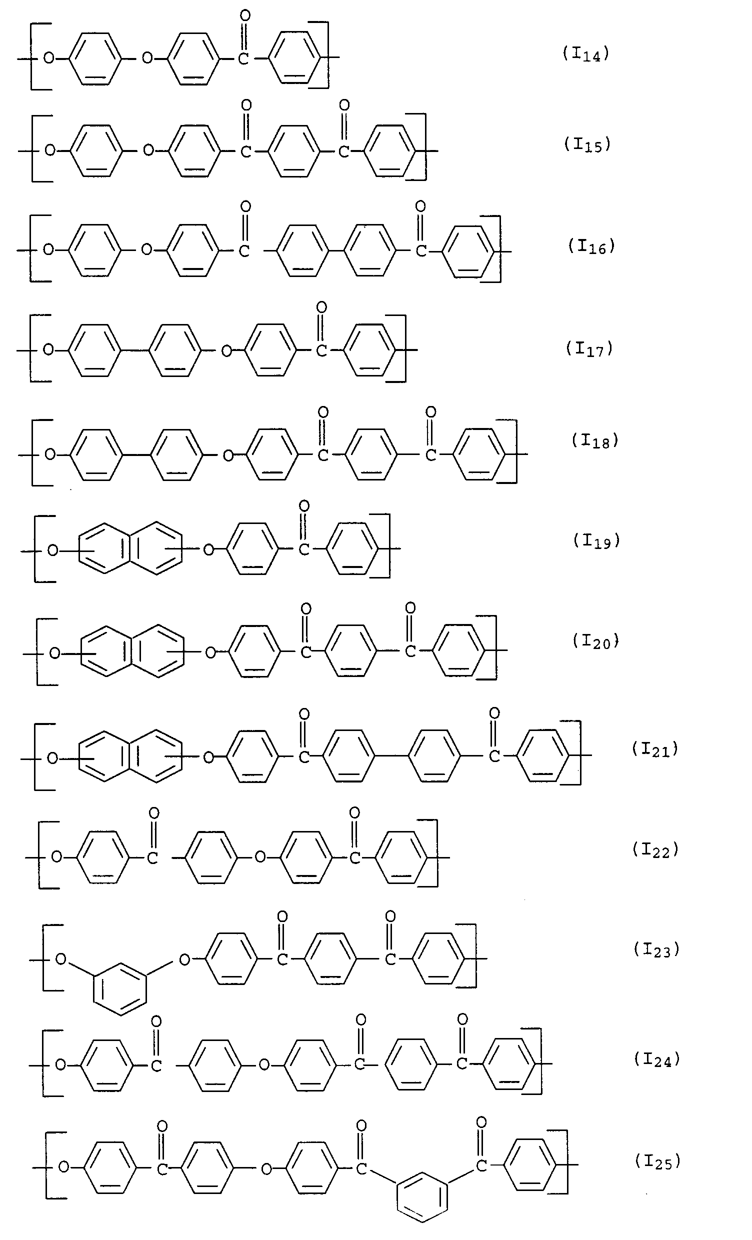

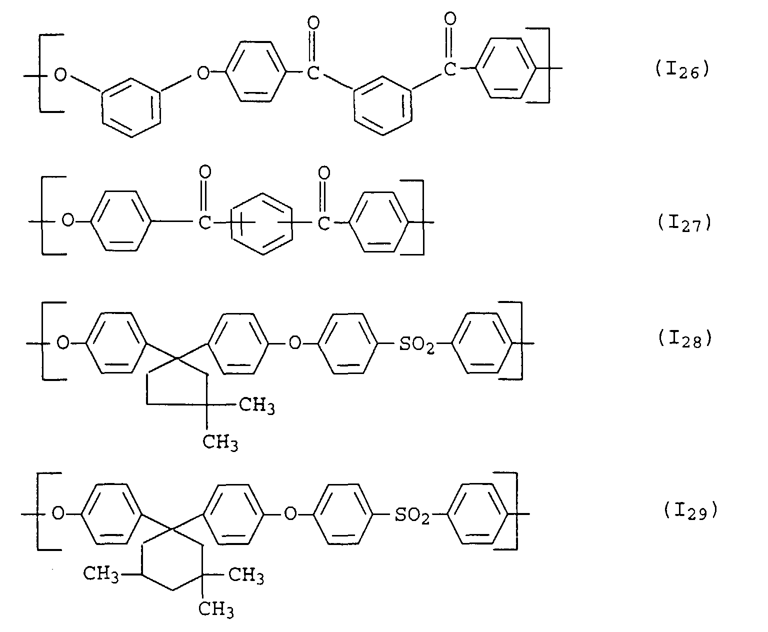

Als besonders bevorzugte Einheiten der Formel I sind zu nennen Einheiten der Formeln I₁ und I₂, welche einzeln oder im Gemisch vorliegen können.

Die Polyarylenether A können auch Co- oder Blockcopolymere sein, in denen Polyarylenethersegmente und Segmente von anderen thermoplastischen Polymeren, wie Polyamiden, Polyestern, aromatischen Polycarbonaten, Polyestercarbonaten, Polysiloxanen, Polyimiden oder Polyetherimiden vorliegen. Die Molekulargewichte (Zahlenmittel) der Blöcke- bzw. der Pfropfarme in den Copolymeren liegen in der Regel im Bereich von 1 000 bis 30 000 g/mol. Die Blöcke unterschiedlicher Struktur können alternierend oder statistisch angeordnet sein. Der Gewichtsanteil der Polyarylenether in den Co- oder Blockcopolymeren beträgt im allgemeinen mindestens 10 Gew.-%. Der Gewichtsanteil der Polyarylenether kann bis zu 97 Gew.-% betragen. Bevorzugt werden Co- oder Blockcopolymere mit einem Gewichtsanteil an Polyarylenether mit bis zu 90 Gew.-%. Besonders bevorzugt werden Co- oder Blockcopolymere mit 20 bis 80 Gew.-% Polyarylenether.

Im allgemeinen weisen die Polyarylenether mittlere Molekulargewichte Mₙ (Zahlenmittel) im Bereich von 5 000 bis 60 000 g/mol und relative Viskositäten von 0,20 bis 0,95 dl/g auf. Die relativen Viskositäten werden je nach Löslichkeit der Polyarylenether entweder in 1 gew.-%iger N-Methylpyrrolidon-Lösung, in Mischungen aus Phenol und Dichlorbenzol oder in 96%iger Schwefelsäure bei jeweils 20°C bzw. 25°C gemessen.

Der Anteil der Komponente B (funktionalisierter Polyolefinkautschuk) an den erfindungsgemäßen Formmassen beträgt etwa 1 bis 50 Gew.-%, vorzugsweise etwa 2,5 bis etwa 30 Gew.-%.

Bevorzugte funktionalisierte Kautschuke sind aus folgenden Komponenten aufgebaut:
b₁) 40 bis 99 Gew.-% mindestens eines α-Olefins mit 2 bis 8 C-Atomen;
b₂) 0 bis 50 Gew.-% eines Diens;
b₃) 0 bis 45 Gew.-% eines C₁-C₁₂-Alkylesters der Acrylsäure oder Methacrylsäure oder Mischungen derartiger Ester;
b₄) 0 bis 40 Gew.-% einer ethylenisch ungesättigten C₂-C₂₀-Mono- oder Dicarbonsäure oder einem funktionellen Derivat einer solchen Säure;
b₅) 1 bis 40 Gew.-% eines Epoxygruppen enthaltenden Monomeren; und
b₆) 0 bis 5 Gew.-% sonstiger radikalisch polymerisierbarer Monomerer.

Als Beispiele für geeignete α-Olefine b₁) können Ethylen, Propylen, 1-Butylen, 1-Pentylen, 1-Hexylen, 1-Heptylen, 1-Octylen, 2-Methylpropylen, 3-Methyl-1-butylen und 3-Ethyl-1-butylen genannt werden, wobei Ethylen und Propylen bevorzugt sind.

Als geeignete Dien-Monomere b₂) seien beispielsweise konjugierte Diene mit 4 bis 8 C-Atomen, wie Isopren und Butadien, nicht-konjugierte Diene mit 5 bis 25 C-Atomen, wie Penta-1,4-dien, Hexa-1,4-dien, Hexa-1,5-dien, 2,5-Dimethylhexa-1,5-dien und Octa-1,4-dien, cyclische Diene, wie Cyclopentadien, Cyclohexadiene, Cyclooctadiene und Dicyclopentadien, sowie Alkenylnorbornene, wie 5-Ethyliden-2-norbornen, 5-Butyliden-2-norbornen, 2-Methallyl-5-norbornen, 2-Isopropenyl-5-norbornen und Tricyclodiene, wie 3-Methyltricyclo-(5.2.1.0.2.6)-3,8-decadien, oder deren Mischungen genannt. Bevorzugt werden Hexa-1,5-dien, 5-Ethyliden-norbornen und Dicyclopentadien. Der Diengehalt beträgt vorzugsweise 0,5 bis 50, insbesondere 2 bis 20 und besonders bevorzugt 3 bis 15 Gew.-%, bezogen auf das Gesamtgewicht des Olefinpolymerisats.

Beispiele für geeignete Ester b₃) sind Methyl-, Ethyl-, Propyl-, n-Butyl, i-Butyl- und 2-Ethylhexyl-, Octyl- und Decylacrylate bzw. die entsprechenden Ester der Methacrylsäure. Von diesen werden Methyl-, Ethyl-, Propyl-, n-Butyl- und 2-Ethylhexylacrylat bzw. -methacrylat besonders bevorzugt.

Anstelle der Ester b₃) oder zusätzlich zu diesen können in den Olefinpolymerisaten auch säurefunktionelle und/oder latent säurefunktionelle Monomere ethylenisch ungesättigter Mono- oder Dicarbonsäuren b₄) enthalten sein.

Als Beispiele für Monomere b₄) seien Acrylsäure, Methacrylsäure, tertiäre Alkylester dieser Säuren, insbesondere tert.-Butylacrylat und Dicarbonsäuren, wie Maleinsäure und Fumarsäure, oder Derivate dieser Säuren sowie deren Monoester genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit 2 bis 20 C-Atomen, insbesondere Maleinsäureanhydrid und tertiäre C₁-C₁₂-Alkylester der vorstehend genannten Säuren, insbesondere tert.-Butylacrylat und tert.-Butylmethacrylat angeführt.

Ethylenisch ungesättigte Dicarbonsäuren und Anhydride b₄) sind darstellbar durch folgende allgemeine Formeln IV und V:

R²C(COOR³)=C(COOR⁴)R⁵ (IV)

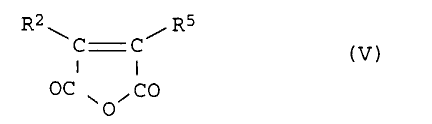

worin R², R³, R⁴ und R⁵ unabhängig voneinander für H oder C₁-C₆-Alkyl stehen.

Epoxygruppen tragende Monomere b₅) sind darstellbar durch folgende allgemeine Formeln VI und VII 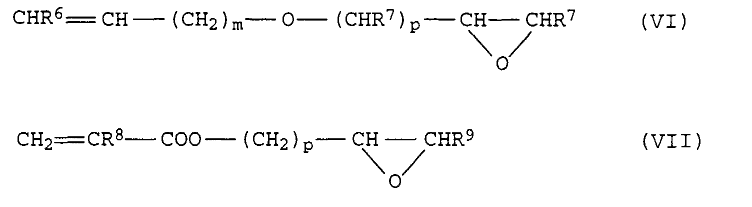 worin R⁶, R⁷, R⁸ und R⁹ unabhängig voneinander für H oder C₁-C₆-Alkyl stehen, m eine ganze Zahl von 0 bis 20 und p eine ganze Zahl von 0 bis 10 ist.

Bevorzugt stehen R² bis R⁹ für Wasserstoff, m für den Wert 0 oder 1 und p für den Wert 1.

Bevorzugte Verbindungen b₄) bzw. b₅) sind Maleinsäure, Fumarsäure und Maleinsäureanhydrid bzw. Alkenylglycidylether und Vinylglycidylether.

Besonders bevorzugte Verbindungen der Formeln IV und V bzw. VI und VII sind Maleinsäure und Maleinsäureanhydrid bzw. Epoxygruppen-enthaltende Ester der Acrylsäure und/oder Methacrylsäure, insbesondere Glycidylacrylat und Glycidylmethacrylat.

Besonders bevorzugt sind Olefinpolymerisate aus
- 50 bis 98,9,: insbesondere 60 bis 94,85 Gew.-% Ethylen,
- 1 bis 50,0,: insbesondere 5 bis 40 Gew.-% eines Esters der Acryl- oder Methacrylsäure, und
- 0,1 bis 20,0,: insbesondere 0,15 bis 15 Gew.-% Glycidylacrylat und/oder Glycidylmethacrylat, Acrylsäure und/oder Maleinsäureanhydrid.

Besonders geeignete funktionalisierte Kautschuke B sind
Ethylen-Methylmethacrylat-Glycidylmethacrylat-,
Ethylen-Methylacrylat-Glycidylmethacrylat-,
Ethylen-Methylacrylat-Glycidylacrylat- und
Ethylen-Methylmethacrylat-Glycidylacrylat-Polymere.

Als sonstige Monomere b₆) kommen z.B. Vinylester und Vinylether in Betracht.

Die Herstellung der vorstehend beschriebenen Polymere kann nach an sich bekannten Verfahren erfolgen, vorzugsweise durch statistische Copolymerisation unter hohem Druck und erhöhter Temperatur.

Der Schmelzindex der Copolymeren liegt im allgemeinen im Bereich von 1 bis 80 g/10 min (gemessen bei 190°C und 2,16 kg Belastung).

Der Anteil der Komponente C (Carboxylgruppen-enthaltender Polyarylenether) in den erfindungsgemäßen thermoplastischen Formmassen beträgt 1 bis 50, vorzugsweise 1,5 bis 30 Gew.-%.

Die in den erfindungsgemäßen Formmassen als Verträglichkeitsvermittler verwendeten, seitenständig carboxylierten Polyarylenether (Komponente C), umfassend die Strukturelemente der Formeln I und II, sind an sich bekannte Verbindungen oder nach bekannten Verfahren herstellbar.

Beispielsweise sind die erfindungsgemäß modifizierten Polyarylenether zugänglich in Anlehnung an die EP-A-0 185 237 sowie nach den von I.W. Parsons et al., in Polymer, 34, 2836 (1993) und T. Koch, H. Ritter, in Macromol. Phys. 195, 1709 (1994) beschriebenen Verfahren.

Die Polyarylenether sind demnach beispielsweise erhältlich durch Polykondensation von Verbindungen der allgemeinen Formel III 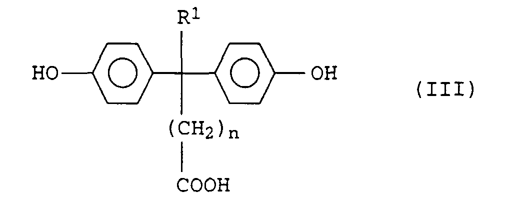 worin R¹ und n die oben angegebenen Bedeutungen besitzen mit wenigstens einer weiteren, z.B. chlorfunktionalisierten aromatischen Verbindung, wie z.B. Bis-(4-chlorphenyl)sulfon, und gegebenenfalls weiteren hydroxyfunktionalisierten Verbindungen, wie z.B. Bisphenol A und/oder Bisphenol S. Geeignete Reaktionspartner sind dem Fachmann allgemein bekannt.

Zur Herstellung der modifizierten Polyarylenether C können prinzipiell auch die für Polyarylenether A verwendeten Methoden eingesetzt werden, wobei die Lösungspolymerisation in dipolar aprotischen Lösungsmitteln unter Baseneinwirkung bevorzugt wird.

Obige Ausführungen zu bevorzugten Strukturelementen der Formel I für Polyarylenether A gelten entsprechend für die modifizierten Polyarylenether C.

Beispiele für geeignete Strukturelemente II sind: 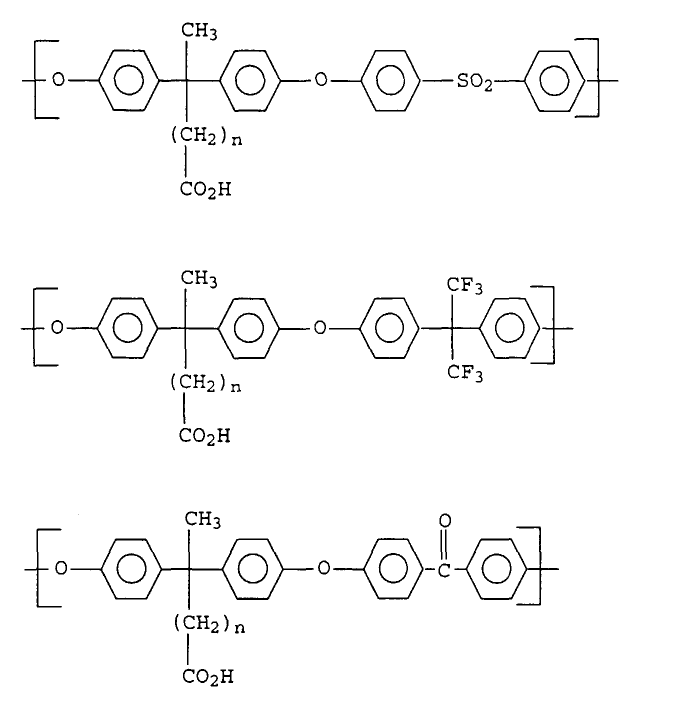 worin n jeweils für eine ganze Zahl von 0 bis 4 steht.

Die erfindungsgemäß verwendeten säuregruppenhaltigen Polyarylenether C weisen Viskositätszahlen von etwa 15 bis 80 ml/g auf (bestimmt in 1%iger NMP-Lösung bei 25°C). Der Anteil freier Säuregruppen in der Komponente C beträgt 0,05 bis 25, vorzugsweise 0,1 bis 20 und insbesondere 0,1 bis 15 Mol-%, wobei die Bestimmung des Anteils an Säuregruppen, wie bei I.W. Parsons et al., Polymer, 34, 2836 (1993) beschrieben, durch ¹H-NMR erfolgt.

Als Komponente D enthalten die erfindungsgemäßen Formmassen faser- oder teilchenförmige Füll- oder Verstärkungsstoffe in einem Anteil von 0 bis etwa 60 Gew.-%, vorzugsweise 0 bis etwa 45 Gew.-%.

Bevorzugte faserförmige Füll- oder Verstärkungsstoffe sind Kohlenstoffasern, Kaliumtitanatwhisker, Aramidfasern und besonders bevorzugt Glasfasern. Bei der Verwendung von Glasfasern können diese zur besseren Verträglichkeit mit dem Matrixmaterial mit einer Schlichte und einem Haftvermittler ausgerüstet sein. Im allgemeinen haben die verwendeten Kohlenstoff- und Glasfasern einen Durchmesser im Bereich von 6 bis 20 µm.

Die Einarbeitung der Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Kohlenstoff- oder Glasfasern können auch in Form von Geweben, Matten oder Glasseidenrovings eingesetzt werden.

Als teilchenförmige Füllstoffe eignen sich amorphe Kieselsäure, Magnesiumcarbonat (Kreide), gepulverter Quarz, Glimmer, Talkum, Feldspat, Glaskugeln und insbesondere Calciumsilikate wie Wollastonit und Kaolin (insbesondere kalzinierter Kaolin).

Bevorzugte Kombinationen von Füllstoffen sind z.B. 20 Gew.-% Glasfasern mit 15 Gew.-% Wollastonit und 15 Gew.-% Glasfasern mit 15 Gew.-% Wollastonit.

Als Komponente E können die erfindungsgemäßen Formmassen noch z.B. bis 40 Gew.-% vorzugsweise bis zu 35 Gew.-% weiterer Additive, wie Flammschutzmittel, Farbstoffe, Pigmente oder Stabilisatoren sowie Gleitmittel, enthalten.

Die erfindungsgemäßen Formmassen können nach an sich bekannten Verfahren, beispielsweise durch Extrusion, hergestellt werden.

Die thermoplastischen Formmassen können z.B. hergestellt werden, indem man die Ausgangskomponenten in üblichen Mischvorrichtungen wie Schneckenextrudern, vorzugsweise Zweischneckenextrudern, Brabender-Mühlen oder Banbury-Mühlen sowie Knetern mischt und anschließend extrudiert. Üblicherweise wird das Extrudat nach der Extrusion abgekühlt und zerkleinert.

Die Reihenfolge der Mischung der Komponenten kann variiert werden, so können zwei oder gegebenenfalls drei Komponenten vorgemischt werden, es können aber auch alle Komponenten gemeinsam gemischt werden.

Um eine möglichst homogene Formmasse zu erhalten, ist eine intensive Durchmischung vorteilhaft. Dazu sind im allgemeinen mittlere Mischzeiten von 0,2 bis 30 Minuten bei Temperaturen von 280 bis 380°C erforderlich. Nach Extrusion wird das Extrudat gewöhnlich abgekühlt und zerkleinert.

Die füllstoffhaltigen Formmassen weisen sehr gute Zähigkeiten und Festigkeiten auf. Daneben zeichnen sie sich durch ihre sehr guten Verarbeitungs- und Hydrolysestabilitäten aus. Sie eignen sich daher beispielsweise zum Herstellen von Formteilen, die hohen mechanischen Belastungen oder chemischen Einflüssen ausgesetzt sind.

Die Erfindung wird nun anhand der folgenden nicht limitierenden Beispiele beschrieben.

### Beispiele

In den folgenden Herstellungsbeispielen wurde die Viskositätszahl der Produkte in 1%iger Lösung von N-Methylpyrrolidon bei 25°C bestimmt. Der Anteil der Einheiten mit Säuregruppen wurde wie bei I.W. Parsons et al., Polymer 34, 2836 (1993) beschrieben durch ¹H-NMR-Spektroskopie ermittelt.

### Herstellungsbeispiel 1:

### Carboxylierter Polyarylenether C₁

Unter Stickstoffatmosphäre wurden 5,742 kg Dichlordiphenylsulfon, 4,374 kg Bisphenol A und 112 g Bis-4,4-(4-hydroxyphenyl)valeriansäure in 29 kg N-Methylpyrrolidon gelöst und mit 2,820 kg wasserfreiem Kaliumcarbonat versetzt.

Die Reaktionsmischung wurde bei einem Druck von 300 mbar unter ständigem Abdestillieren des Reaktionswassers und N-Methylpyrrolidon zunächst 1 h auf 180°C erhitzt und dann 6 h bei 190°C weiter umgesetzt.

Nach Zugabe von 40 kg N-Methylpyrrolidon wurden die anorganischen Bestandteile abfiltriert. Durch Zugabe von 50 ml Eisessig wurden basische Gruppen neutralisiert, anschließend wurde das Polymer durch Fällung in Wasser isoliert. Nach 3-maliger Extraktion mit Wasser wurde das Produkt bei 140°C im Vakuum getrocknet. Es wurde ein weißes Pulver erhalten.

Der Anteil an Einheiten mit Säuregruppen wurde mittels H-NMR zu 1,2 mol-% bestimmt, die Viskositätszahl des Produkts betrug 38,1 ml/g.

### Herstellungsbeispiel 2:

### Carboxylierter Polyarylenether C₂

Unter Stickstoffatmosphäre wurden 5,742 kg Dichlordiphenylsulfon, 4,240 kg Bisphenol A und 280 g Bis-4,4-(4-hydroxyphenyl)valeriansäure in 29 kg N-Methylpyrrolidon gelöst und mit 2,820 kg wasserfreiem Kaliumcarbonat versetzt.

Die Reaktionsmischung wurde bei einem Druck von 300 mbar unter ständigem Abdestillieren des Reaktionswassers und N-Methylpyrrolidon zunächst 1 h auf 180°C erhitzt und dann 6 h bei 190°C weiter umgesetzt.

Nach Zugabe von 40 kg N-Methylpyrrolidon wurden die anorganischen Bestandteile abfiltriert. Durch Zugabe von 150 ml Eisessig wurden basische Gruppen neutralisiert, anschließend wurde das Polymer durch Fällung in Wasser isoliert. Nach 3-maliger Extraktion mit Wasser wurde das Produkt bei 140°C im Vakuum getrocknet. Es wurde ein weißes Pulver erhalten.

Der Anteil an Einheiten mit Säuregruppen wurde mittels H-NMR zu 3,1 mol-% bestimmt, die Viskositätszahl des Produkts betrug 37,1 ml/g.

### Herstellungsbeispiel 3:

### Carboxylierter Polyarylenether C₃

Unter Stickstoffatmosphäre wurden 5,742 kg Dichlordiphenylsulfon, 5,076 kg Dihydroxydiphenylsulfon und 305,8 g Bis-4,4-(4-hydroxyphenyl)valeriansäure in 29 kg N-Methylpyrrolidon gelöst und mit 2,820 kg wasserfreiem Kaliumcarbonat versetzt.

Die Reaktionsmischung wurde bei einem Druck von 300 mbar unter ständigem Abdestillieren des Reaktionswassers und N-Methylpyrrolidon zunächst 1 h auf 180°C erhitzt und dann 6 h bei 190°C weiter umgesetzt.

Nach Zugabe von 40 kg N-Methylpyrrolidon wurden die anorganischen Bestandteile abfiltriert. Durch Zugabe von 300 ml Eisessig wurden basische Gruppen neutralisiert, anschließend wurde das Polymer durch Fällung in Wasser isoliert. Nach 3-maliger Extraktion mit Wasser wurde das Produkt bei 140°C im Vakuum getrocknet. Es wurde ein weißes Pulver erhalten.

Der Anteil an Einheiten mit Säuregruppen wurde mittels H-NMR zu 3,0 mol-% bestimmt, die Viskositätszahl des Produkts betrug 40,2 ml/g.

### Anwendungsbeispiel:

### Herstellung und Prüfung der Formmassen

Unter Verwendung der carboxylierten Polyarylenether C₁, C₂ und C₃ sowie der im folgenden aufgeführten Komponenten A₁, A₂ und B werden erfindungsgemäße Formmassen (1 bis 5) hergestellt und mit üblichen Formmassen (V1 bis V6) verglichen.

### Komponente A₁

Als Polyarylether A₁ wurde Ultrason S 2010 (Handelsprodukt der BASF AG) verwendet. Dieses Produkt ist charakterisiert durch eine Viskositätszahl von 56 ml/g, gemessen in 1%iger NMP-Lösung bei 25°C.

### Komponente A₂

Als Polyarylether A₂ wurde Ultrason E 1010 (Handelsprodukt der BASF AG) verwendet. Dieses Produkt ist charakterisiert durch eine Viskositätszahl von 49 ml/g, gemessen in 1%iger NMP-Lösung bei 25°C.

### Komponente B

Ethylen-Methylmethacrylat-Glycidylmethacrylat-Polymer mit 25 Gew.-% MMA und 8 Gew.-% GMA charakterisiert durch einen Schmelzindex (190°C, 2,16 kg) von 6 g/10 min, z.B. Lotader AX 8900 der Firma Elf-Atochem.

Die Komponenten wurden in einem Zweiwellenextruder bei einer Massetemperatur von 300 bis 350°C gemischt. Die Schmelze wurde durch ein Wasserbad geleitet und granuliert. Die Polysulfon enthaltenden Formmassen wurden bei einer Massetemperatur von 310°C verarbeitet, während die Polyethersulfon enthaltenden Formmassen bei 350°C verarbeitet wurden. Die Formtemperatur war jeweils 100°C.

Die Wärmeformbeständigkeit der Proben wurde mittels der Vicat-Erweichungstemperatur ermittelt. Die Vicat-Erweichungstemperatur wurde nach DIN 53 460, mit einer Kraft von 49,05 N und einer Temperatursteigerung von 50 K je Stunde, an Normkleinstäben ermittelt.

Die Schlagzähigkeiten (aₙ und aₖ) der Produkte wurde an ISO-Stäben nach ISO 179 1eu bzw. 1eA bestimmt.

Die Schädigungsarbeit (Wₛ) wurde an Rundscheiben nach DIN 53 443 ermittelt.

Die Wasseraufnahme der Proben wurde an Schulterstäben, die 14 Tage in siedendem Wasser gelagert waren, bestimmt.

Die Chemikalienbeständigkeit der Produkte wurde qualitativ nach einer der Biegestreifenmethode ähnlichen Variante bestimmt. Dabei wurden Zugstäbe auf eine Schablone mit Biegeradius 120 mm aufgespannt und mit einem Aceton-gesättigten Wattebausch beaufschlagt. Es wurde die Zeit bis zum Bruch bestimmt (t_{br}).

Die Zusammensetzungen der Formmassen und die Ergebnisse der Prüfungen sind in Tabelle 1 aufgeführt.

**Tabelle 1**

| Formmasse Nr. | V1 | V2 | 1 | V3 | 2 | 3 | V4 | V5 | 4 | V6 | 5 |
|---|---|---|---|---|---|---|---|---|---|---|---|
| Komponente [Gew.-%] | | | | | | | | | | | |
| A₁ | 100 | 90 | 80 | 80 | 70 | 70 | - | - | - | - | - |
| A₂ | - | - | - | - | - | - | 100 | 90 | 80 | 80 | 70 |
| B | - | 10 | 10 | 20 | 20 | 20 | - | 10 | 10 | 20 | 20 |
| C₁ | - | - | 10 | - | 10 | - | - | - | - | - | - |
| C₂ | - | - | - | - | - | 10 | - | - | - | - | - |
| C₃ | - | - | - | - | - | - | - | - | 10 | - | 10 |
| Vicat B [°C] | 184 | 180 | 180 | 177 | 177 | 177 | 216 | 213 | 212 | 205 | 205 |
| aₙ [kJ/m²] | 345 | 121 | 321 | 67 | 249 | 287 | 409 | 141 | 326 | 78 | 243 |
| aₖ [kJ/m²] | 8,7 | 5,7 | 31,6 | 4,9 | 28,6 | 31,3 | 8,5 | 7,9 | 56 | 5,3 | 37,3 |
| Wₛ [Nm] | 54,0 | 15,1 | 48,1 | 6,9 | 37,1 | 43,1 | 57,7 | 19,9 | 46,2 | 6,2 | 34,1 |
| Wasseraufnahme [%] | 0,7 | 0,62 | 0,62 | 0,56 | 0,56 | 0,57 | 1,87 | 1,70 | 1,69 | 1,53 | 1,51 |
| t_{br} [s] | 2 | 14 | 17 | 24 | 26 | 28 | 17 | 41 | 45 | 56 | 58 |
| V1-V6: Vergleichsversuche aₙ = Schlagzähigkeit aₖ = Kerbschlagzähigkeit Wₛ = Schädigungsarbeit | | | | | | | | | | | |

Die Meßergebnisse von Tabelle 1 zeigen, daß sich die erfindungsgemäßen Formmassen durch verringerte Wasseraufnahme, verbesserte Zähigkeit und durch bessere Chemikalienresistenz auszeichnen.

## Patentansprüche

1. Thermoplastische Formmasse, enthaltend
A) wenigstens einen Polyarylenether,
B) wenigstens einen funktionalisierten Polyolefinkautschuk und
C) wenigstens einen modifizierten, Carboxlgruppen-haltigen Polyarylenether mit wiederkehrenden Strukturelementen der Formeln I und II 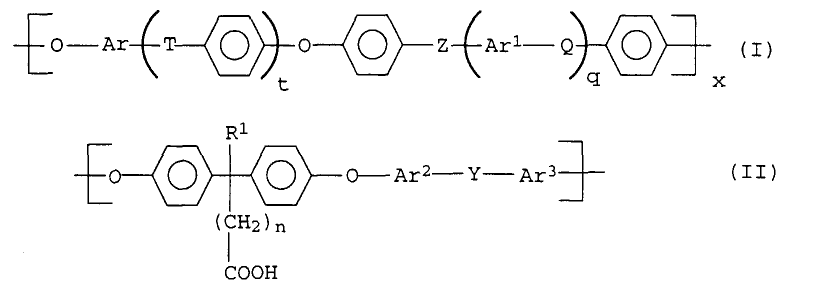 umfaßt,
worin
x für 0,5 oder 1 steht,
t und q unabhängig voneinander für 0, 1, 2 oder 3 stehen,
n für eine ganze Zahl von 0 bis 6 steht,
Q, T, Y und Z unabhängig voneinander jeweils eine chemische Bindung oder eine Gruppe, ausgewählt unter -O-, -S-, -SO₂-, S=O, C=O, -N=N-, -R^{a}C=CR^{b}- und -CR^{c}R^{d}-, bedeuten, wobei
R^{a} und R^{b} unabhängig voneinander jeweils für ein Wasserstoffatom oder eine C₁-C₁₂-Alkylgruppe, stehen und
R^{c} und R^{d} unabhängig voneinander jeweils für ein Wasserstoffatom oder eine C₁-C₁₂-Alkyl-, C₁-C₁₂-Alkoxy- oder C₆-C₁₈-Arylgruppe stehen, wobei R^{c} und R^{d} gegebenenfalls unabhängig voneinander mit Fluor- und/oder Chloratomen substituiert sind oder gegebenenfalls zusammen mit dem C-Atom an das sie gebunden sind, eine C₃-C₁₂-Cycloalkylgruppe bilden, die gegebenenfalls mit einer oder mehreren C₁-C₆-Alkylgruppen substituiert ist,
mit der Maßgabe, daß mindestens eine der Gruppen T, Q und Z für -SO₂- oder C=O steht und, wenn t und q für 0 stehen, Z für -SO₂- oder C=O steht,
Ar, Ar¹, Ar² und Ar³ unabhängig voneinander für C₆-C₁₈-Arylengruppen stehen, wobei diese gegebenenfalls mit C₁-C₁₂-Alkyl-, C₆-C₁₈-Aryl-, C₁-C₁₂-Alkoxygruppen oder Halogenatomen substituiert sind,
R¹ für H, C₁-C₆-Alkyl, oder -(CH₂)ₙ-COOH steht; und
wobei das molare Verhältnis von Einheiten der Formel I zu Einheiten der Formel II im Bereich von 0,05:99,95 bis 99,95:0,05 liegt.

2. Formmasse nach Anspruch 1, dadurch gekennzeichnet, daß der modifizierte Polyarylenether (Komponente C) einen Anteil freie Säuregruppen enthaltende Einheiten der Formel II von etwa 0,05 bis 25 mol-%, bestimmt durch ¹H-NMR, aufweist.

3. Formmasse nach einem der vorherigen Ansprüche, dadurch gekennzeichnet, daß der modifizierte Polyarylenether C) Strukturelemente der Formel II umfaßt, worin Ar² und Ar³ jeweils für 1,4-Phenylen, Y für SO₂, R¹ für C₁-C₆-Alkyl und n für eine ganze Zahl von 1 bis 6 steht.

4. Formmasse nach einem der vorherigen Ansprüche, dadurch gekennzeichnet, daß der Polyarylenether A) aus wiederkehrenden Strukturelementen obiger Formel I aufgebaut ist, wobei Ar, Ar¹, T, Q, Z, t und q die oben angegebenen Bedeutungen besitzen.

5. Formmasse nach einem der vorherigen Ansprüche, dadurch gekennzeichnet, daß die Einheiten der Formel I in den Komponenten A) und C) unabhängig voneinander ausgewählt sind unter Einheiten der Formel I₁ und I₂ 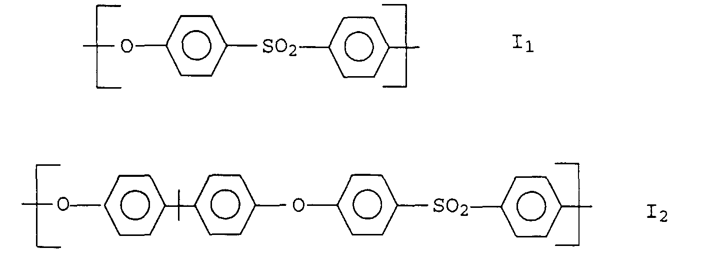 oder Gemischen davon.

6. Formmasse nach einem der vorherigen Ansprüche, dadurch gekennzeichnet, daß der funktionalisierte Polyolefinkautschuk Glycidylgruppen trägt.

7. Formmasse nach einem der vorherigen Ansprüche, dadurch gekennzeichnet, daß sie, bezogen auf das Gesamtgewicht der Formmasse,
A) etwa 5 bis etwa 98 Gew.-% wenigstens eines Polyarylenethers,
B) etwa 1 bis etwa 50 Gew.-% wenigstens eines funktionalisierten Polyolefinkautschuks,
C) etwa 1 bis etwa 50 Gew.-% wenigstens eines Polyarylenethers mit Carboxylgruppen,
D) 0 bis etwa 60 Gew.-% wenigstens eines faser- oder teilchenförmigen Füll- oder Verstärkungsstoffs und
E) 0 bis etwa 30 Gew.-% wenigstens eines weiteren üblichen Zusatzstoffs
umfaßt.

8. Verwendung von Formmassen nach einem der vorherigen Ansprüche zur Herstellung von Fasern, Filmen und Formkörpern.

9. Fasern, Filme und Formkörper, hergestellt unter Verwendung einer Formmasse nach einem der Ansprüche 1 bis 7.

10. Formkörper nach Anspruch 9, ausgewählt unter Haushaltsartikeln, elektronischen Bauteilen, Laborgeräten, medizinischtechnischen Geräten oder Teilen davon.
